(19) Europäisches Patentamt
European Patent Office
Office européen des brevets

(11) Numéro de publication : 0 473 509 A2

(12) # DEMANDE DE BREVET EUROPEEN

(21) Numéro de dépôt : 91402321.3

(22) Date de dépôt : 28.08.91

(51) Int. Cl.[5] : C01B 33/18, C01B 33/34

(30) Priorité : 27.03.91 FR 9103697
27.03.91 FR 9103698
29.08.90 FR 9010761

(43) Date de publication de la demande :
04.03.92 Bulletin 92/10

(84) Etats contractants désignés :
DE FR GB IT NL

(71) Demandeur : RHONE-POULENC CHIMIE
25, quai Paul Doumer
F-92408 Courbevoie Cédex (FR)

(72) Inventeur : Faust, Anne Catherine
23, rue de Bourgogne
F-68100 Mulhouse (FR)
Inventeur : Popa, Jean-Michel
2, Rue Roger Breton
F-93700 Drancy (FR)
Inventeur : Guth, Jean-Louis
59, Rue Bellevue
F-68200 Brunstatt (FR)
Inventeur : Hoffner, Frédérique
4, Rue des Teinturiers
F-68550 Saint-Amarin (FR)

(74) Mandataire : Dutruc-Rosset, Marie-Claude et al
RHONE-POULENC CHIMIE Direction des Brevets 25, Quai Paul Doumer
F-92408 Courbevoie Cédex (FR)

(54) **Procédé de préparation de zéolithes à base de silice et éventuellement d'oxydes d'éléments tétravalents.**

(57) La présente invention a pour objet un procédé de préparation de zéolithes de structure MFI à base d'oxyde de silicium et, éventuellement, d'oxydes d'éléments tétravalents caractérisé par le fait qu'il comprend les étapes suivantes :

(i) - la préparation d'un mélange réactionnel aqueux, homogène contenant :

. une source de silicium sous forme de complexe $M_{2/n}$ $SiF_6$ (I) où M est un cation de valence n tel qu'un proton, un ion alcalin, un ion alcalino-terreux, un métal de transition, un ion ammonium ou ammonium quaternaire,

. éventuellement, une ou plusieurs sources d'éléments tétravalents T′ sous forme de complexes $M_{2/n}$ $T'F_6$ (II), M ayant la signification donnée précédemment et T′ représente le titane, le germanium, le zirconium et/ou l'étain,

. un agent chimique (Mod) qui fournit des ions $OH^-$ par décomposition hydrothermique dans les conditions réactionnelles,

. un agent structurant (Str) qui oriente et stabilise la formation de la zéolithe

(ii) - le chauffage de ce mélange réactionnel à une température d'au moins 120°C conduisant à la formation d'un précipité qui est ensuite séparé,

(iii) - la calcination dudit précipité à une température supérieure à 450°C, pour l'élimination de l'agent structurant occlus dans les canaux.

EP 0 473 509 A2

La présente invention a pour objet un nouveau procédé de préparation de zéolithes à base d'oxyde de silicium et, éventuellement, d'oxydes d'éléments tétravalents.

Plus précisément, l'invention vise un procédé de préparation de zéolithes de structure MFI à base de silice.

L'invention concerne également un procédé de préparation de zéolithes de structure MFI à base de silice et d'oxydes d'éléments tétravalents choisis parmi le titane, le germanium, le zirconium et/ou l'étain

Les zéolithes sont des tectosilicates cristallisés. Les structures sont constituées par des assemblages de tétraèdres $TO_4$ formant une charpente tridimensionnelle par la mise en commun des oxygènes. Dans les zéolithes du type aluminosilicate qui sont les plus communes, T représente le silicium tétravalent ainsi que l'aluminium trivalent. Les cavités et canaux de dimensions moléculaires de cette charpente accueillent les cations compensant le déficit de charge lié à la présence de l'aluminium trivalent dans les tétraèdres. Des éléments trivalents comme le gallium et plus rarement le bore ou le béryllium peuvent se substituer à l'aluminium.

La composition peut être décrite par la formule générale :

$x_1M_1^{n1+} ; x_2M_2^{n2+}..[(y_1T_1 ; y_2T_2..)O_2(y_1 + y_2 +..)]^{x-} z_1A_1 ; z_2A_2..$

dans laquelle les termes entre crochets représentent la composition de la charpente en éléments T, les autres termes correspondant aux espèces dans les micropores de la charpente : $M_1$, $M_2$... sont les cations de compensation lorsque $x > 0$ et $A_1$, $A_2$ ... représentent de l'eau, des paires ioniques ou des molécules. En particulier lorsque les éléments T sont des éléments uniquement tétravalents, il n'y a pas de charges négatives sur la charpente ($x = 0$) ce qui conduit à l'absence des cations de compensation $M_1$, $M_2$...

Chaque type de zéolithe possède une structure poreuse distincte. La variation des dimensions et formes des pores d'un type à l'autre, entraîne des changements des propriétés adsorbantes. Seules les molécules ayant certaines dimensions et formes sont capables d'entrer dans les pores d'une zéolithe particulière. En raison de ces caractéristiques remarquables, les zéolithes conviennent tout particulièrement pour la purification ou la séparation de mélanges gazeux ou liquides comme, par exemple, la séparation d'hydrocarbures par adsorption sélective.

La composition chimique avec en particulier la nature des éléments présents dans les tétraèdres $TO_4$ et la nature des cations de compensation échangeables, est également un facteur important intervenant dans la sélectivité de l'adsorption et surtout dans les propriétés catalytiques de ces produits. Ils sont utilisés comme catalyseurs ou supports de catalyseurs dans le craquage, le reformage et la modification d'hydrocarbures ainsi que dans l'élaboration de nombreuses molécules.

De nombreuses zéolithes existent dans la nature : ce sont des aluminosilicates dont les disponibilités et propriétés ne répondent pas toujours aux exigences des applications industrielles. De ce fait, la recherche de produits ayant des propriétés nouvelles a conduit à la synthèse d'une grande variété de zéolithes essentiellement du type aluminosilicate. Parmi les nombreux exemples de ce type, on peut signaler : la zéolithes A (US-A 2882243), la zéolithe X (US-A 2882244), la zéolithe Y (US-A 3130007), la zéolithe L (FR-A 1224154), la zéolithe T (FR-A 1223775), la zéolithe ZSM5 (US-A 3702886), la zéolithe ZSM12 (US-A 3832449), la zéolithe ZSM48 (EP-A 0015132).

Les zéolithes cristallisent généralement à partir d'une solution aqueuse. Mais, leur faible solubilité empêche la formation de quantités substantielles de cristaux si le milieu réactionnel n'est constitué que d'une solution légèrement sursaturée contenant les éléments T sous forme d'espèces pouvant polycondenser pour former la charpente des zéolithes. Lorsqu'on augmente la sursaturation d'une telle solution, on forme un gel amorphe dont la phase solide contient l'essentiel des éléments T sous forme d'hydroxydes et oxydes.

Le procédé habituel de synthèse des zéolithes consiste alors à transformer ce gel par voie hydrothermale en cristaux de zéolithes, selon un mécanisme de dissolution - recristallisation. Le renouvellement en solution des espèces formant les cristaux par polycondensation est assurée par une dissolution continue de la phase solide du gel, cette dernière jouant le rôle de réservoir de réactif. Cette transformation est facilitée par la présence d'agents mobilisateurs, $OH^-$ ou $F^-$, qui permettent le transfert par la solution des espèces polycondensables. Le milieu réactionnel contient également des agents structurants qui sont incorporés lors de la cristallisation dans l'espace microporeux de la charpente contrôlant ainsi l'édification de la charpente et contribuant, par les interactions qui s'établissent, à la stabilité de l'édifice.

Cette méthode de synthèse à partir d'un gel présente néanmoins quelques inconvénients parmi lesquels on peut citer :

– l'hétérogénéité en composition et en texture du gel qui peut entraîner des variations en composition et en nature des espèces produites en solution, par dissolution du gel,

– une dissolution généralement non congruante,

– un vieillissement pendant la période de chauffage, diminuant sa réactivité,

– une sursaturation de la solution imposée par les qualités du gel et qui peut d'ailleurs évoluer en fonction des facteurs précédents,

– les problèmes techniques liés à la mise en oeuvre : difficultés d'agitation d'un gel qui peut être très visqueux et d'obtention d'une température homogène dans toute la masse réactionnelle,

– incorporation de particules de gel dans les cristaux de zéolithes, lors de leur croissance ce qui conduit à une hétérogénéité au sein du cristal.

L'objectif de la présente invention est de fournir un procédé de préparation de zéolithes de structure MFI qui évite les inconvénients précités.

La présente invention a précisément pour objet un procédé perfectionné de préparation de zéolithes de structure MFI qui permet un meilleur contrôle de la cristallisation de la zéolithe et une cinétique de cristallisation de la zéolithe plus rapide.

Le procédé est basé sur un principe tout à fait différent de ceux antérieurement connus car il ne fait pas appel à un milieu réactionnel contenant au départ un gel nourricier.

Un autre objectif de l'invention est de disposer d'un procédé qui convienne aussi bien pour la préparation de zéolithes comprenant essentiellement de la silice que pour la préparation de de zéolithes à base de silice et d'oxydes d'éléments tétravalents choisis parmi le titane, le germanium, le zirconium et/ou l'étain.

Dans l'exposé qui suit de la présente invention, T symbolise des éléments tétravalents, dont $Si^{4+}$ et T' ; T' symbolisant $Ti^{4+}$, $Ge^{4+}$, $Zr^{4+}$ et/ou $Sn^{4+}$.

Plus particulièrement, la présente invention a pour objet un procédé de préparation de zéolithes de structure MFI à base d'oxyde de silicium et, éventuellement, d'oxydes d'éléments tétravalents caractérisé par le fait qu'il comprend les étapes suivantes :

(i) - la préparation d'un mélange réactionnel aqueux, homogène contenant :

. une source de silicium sous forme de complexe $M_{2/n}\,SiF_6$ (I) où M est un cation de valence n tel qu'un proton, un ion alcalin, un ion alcalino-terreux, un métal de transition, un ion ammonium ou ammonium quaternaire,

. éventuellement, une ou plusieurs sources d'éléments tétravalents T' sous forme de complexes $M_{2/n}\,T'F_6$ (II), M ayant la signification donnée précédemment et T' représente le titane, le germanium, le zirconium et/ou l'étain,

. un agent chimique (Mod) qui fournit des ions $OH^-$ par décomposition hydrothermique dans les conditions réactionnelles,

. un agent structurant (Str) qui oriente et stabilise la formation de la zéolithe

(ii) - le chauffage de ce mélange réactionnel à une température d'au moins 120°C conduisant à la formation d'un précipité qui est ensuite séparé,

(iii) - la calcination dudit précipité à une température supérieure à 450°C, pour l'élimination de l'agent structurant occlus dans les canaux.

Une variante du procédé de l'invention consiste à ajouter également dans le mélange réactionnel, un adjuvant (Adj) qui permet de contrôler la vitesse de libération des ions $OH^-$ générés par la décomposition thermique de l'agent chimique appelé par la suite "modificateur de pH" (Mod).

Les sources des éléments T ($Si^{4+}$ + T') sont présentes dans ce nouveau milieu réactionnel sous forme entièrement soluble. A partir de ces sources, on génère les espèces polycondensables par des réactions d'hydrolyse au moment où elles sont utilisées pour assurer la nucléation et la croissance des cristaux de zéolithes. Ces réactions d'hydrolyse sont produites par une augmentation contrôlée du pH de la solution. Pour cela, on introduit dans la réaction un agent chimique soluble, appelé modificateur du pH, dont la décomposition hydrothermale fournie les anions $OH^-$ nécessaires.

Comme mentionné précédemment, les sources solubles d'éléments T sont, de préférence, des complexes fluorés de type $M_{2/n}\,T\,F_6$ (III) dans ladite formule, M représente un cation de valence n tel qu'un proton ; un ion alcalin, de préférence, le sodium ; un ion alcalino-terreux, de préférence, le calcium ; un métal de transition du groupe VIII de la classification périodique notamment les éléments ayant un nombre atomique de 25 à 30 ; un ion ammonium ou ammonium quaternaire.

Dans ce dernier cas, on pourra se référer à la définition de (V) donnée ci -après.

Dans lesdits complexes de formule (III), n est égal de préférrence à 1 ou 2

Comme exemples de complexes répondant à la formule (III), on peut mentionner :

– l'acide fluorosilicique, le fluorosilicate de sodium, de potassium, de calcium, de baryum ou d'ammonium,

– le fluorotitanate de sodium, de potassium, de rubidium, de césium, de magnésium, de calcium, de cuivre, de zinc ou d'ammonium,

– le fluorogermanate de sodium, de potassium, de rubidium, de césium ou d'ammonium,

– le fluorozirconate de sodium, de potassium, de rubidium, de césium, de magnésium, de manganèse, de nickel, de cuivre, de zinc, de cadmium ou d'ammonium,

– le fluorostannate de sodium, de potassium, de magnésium, de calcium, de baryum, de manganèse, de cobalt, de nickel, de cuivre, de zinc, d'argent, de cadmium ou d'ammonium.

D'un point de vue pratique, les complexes peuvent être obtenus par dissolution des oxydes ou hydroxydes

des éléments T dans l'acide fluorhydrique.

Les complexes fluorés de formule (III) sont stables en milieu acide ou légèrement acide (pH inférieur à environ 6).

Conformément au procédé de l'invention, ces complexes fluorés s'hydrolysent en complexes hydroxylés lorsque le pH augmente selon des réactions du type :

$$M_{2/n}\ T\ F_6 + mH_2O \rightleftarrows M_{2/n}\ T\ F_{6-m}\ (OH)_m + mHF \qquad (1)$$

$$M_{2/n}\ T\ F_{6-m}\ (OH)_m \rightleftarrows T\ F_{4-m}\ (OH)_m + M_{2/n}F_2 \qquad (2)$$

A titre indicatif, on précisera que m dans le complexe octaédrique obtenu selon l'équation (1) est un nombre inférieur ou égal environ à 3 et supérieur ou égal à 1 et que m dans le complexe tétraédrique obtenu selon l'équation (2) est compris entre environ 2 et environ 4.

Les espèces hydroxylées formées sont polycondensables et peuvent servir à la cristallisation de la zéolithe.

La caractéristique du procédé de l'invention est de contrôler la vitesse de formation et la concentration des espèces polyhydroxylés en générant in situ des ions $OH^-$ qui consomment HF et déplacent les deux équilibres ci-dessus (1) et (2), vers la droite. A cet cet effet, on utilise un modificateur de pH, désigné par la suite de manière simplifiée par "Mod", qui se décompose à la température de synthèse de la zéolithe selon une réaction du type (3) :

$$AB + H_2O \rightarrow AH + B^+ + OH^- \qquad (3)$$

A titre d'exemple d'un tel modificateur de pH, on peut prendre l'urée qui se décompose au delà de 100°C, selon les réactions :

$$O = C\ (NH_2)_2 + H_2O \rightarrow CO_2 + 2\ NH_3 \qquad (4)$$

et

$$2\ NH_3 + 2\ H_2O \rightleftarrows 2\ NH_4^+ + 2\ OH^- \qquad (5).$$

Mais, de nombreuses autres espèces chimiques peuvent se comporter comme l'urée et on peut citer, à titre d'exemples, les urées substituées, la thiourée et les thiourées substituées, le cyanamide, les cyanamides substitués, l'hexaméthylène tétramine, la mélamine qui peuvent être utilisés seuls ou en mélange.

Les urées substituées et les thiourées substituées sont respectivement des urées et thiourées substituées à l'azote par un, deux, trois ou quatre radicaux aliphatiques saturés ou insaturés et/ou aromatiques.

Comme exemples de radicaux, on peut citer plus particulièrement les radicaux alcoyle ayant de 1 à 4 atomes de carbone, le radical allyle et/ou le radical phényle.

On donne ci-après des exemples d'urées et thiourées substituées convenant à l'invention :
méthylurée ; diméthylurée symétrique ; diméthylurée dissymétrique ; triméthylurée ; tétraméthylurée ; éthylurée ; N-méthyl N′-éthylurée ; diéthylurée symétrique ; diéthylurée dissymétrique ; triéthylurée ; tétra-éthylurée ; n-proplyurée ; di-n-propylurée symétrique ; tétra-n-propylurée ; n-butylurée ; di-n-amylurée symétrique ; allylurée ; diallylurée symétrique ; diallylurée dissymétrique ; phénylurée ; N-méthyl N′-phénylurée ; N-méthyl N-phényl urée ; N-éthyl N′-phénylurée ; N-éthyl N-phényl urée ; NN-diméthyl N′-phénylurée ; diphénylurée symétrique ; méthyl-thio-urée ; diméthyl-thio-urée symétrique ; diméthyl-thio-urée dissymétrique ; triméthyl-thio-urée ; tétraméthyl-thio-urée ; éthyl-thio-urée ; N-méthyl N′-éthyl-thio-urée; NN-diméthyl N′-éthyl-thio-urée ; diéthyl-thio-urée symétrique ; diéthyl-thio-urée dissymétrique ; triéthyl-thio-urée ; tétraéthyl-thio-urée ; n-propyl-thio-urée ; N-méthyl N′-n-propyl-thio-urée ; N-éthyl N′-n-propyl-thio-urée; di-n-propyl-thio-urée symétrique ; di-n-propyl-thio-urée dissymétrique; N-éthyl NN′-di-n-propyl-thio-urée ; n-Butyl-thio-urée ; i-Butyl-thio-urée ; d-sec.Butyl-thio-urée ; tert.Butyl-thio-urée ; allyl-thio-urée ; N-méthyl N′-allyl-thio-urée ;
NN-diméthyl N′-allyl-thio-urée ; N-éthyl N′-allyl-thio-urée ; NN-diéthyl N′-allyl-thio-urée ; diallyl-thio-urée symétrique ; phényl-thio-urée ; diphényl-thio-urée symétrique.

Les cyanamides substitués sont des cyanamides substitués à l'azote par un ou deux radicaux aliphatiques et/ou aromatiques tels que précédemment définis.

Comme exemples de cyanamides substitués, on peut citer notamment les composés suivants :
méthylcyanamide ; diméthylcyanamide ; éthylcyanamide ; diéthylcyanamide ; di-n-propylcyanamide ; di-n-butylcyanamide ; allylcyanamide ; diallylcyanamide ; phénylcyanamide ; diphénylcyanamide.

Une variante du procédé de l'invention consiste à ajouter également dans le mélange réactionnel, un adjuvant (Adj) qui permet de contrôler la vitesse de libération des ions $OH^-$ générés par la décomposition thermique de l'agent chimique appelé "modificateur de pH" (Mod).

En effet, dans le but d'adapter la vitesse d'accroissement du pH et sa valeur finale à la vitesse de formation des espèces hydroxyles polycondensables et à leur concentration, il peut être utile de modifier la vitesse d'hydrolyse des modificateurs de pH et de limiter la concentration en anions $OH^-$ atteinte. On ajoutera alors avec avantage au mélange réactionnel, un adjuvant (Adj) tel que le formaldéhyde qui en formant par exemple des oligomères urée-formaldéhyde ralentiront la décomposition du modificateur de pH, ou des sels tels que le chlorure d'ammonium qui limiteront la concentration en anions $OH^-$ atteinte.

Les agents structurants convenant pour la mise en oeuvre de l'invention sont :
– les amines tertiaires de formule (IV) :

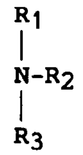

(IV)

dans laquelle :
$R_1$, $R_2$, $R_3$ identiques ou différents représentent un groupe alkyle, linéaire ou ramifié ayant de 1 à 6 atomes de carbone, de préférence un groupe propyle ou butyle.
– les sels d'ammonium quaternaire de formule (V) :

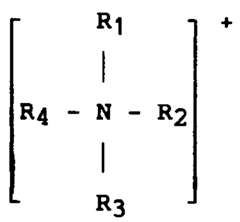

(V)

dans laquelle :
$R_1$, $R_2$, $R_3$, $R_4$ identiques ou différents représentent un groupe alkyle, linéaire ou ramifié ayant de 1 à 6 atomes de carbone, de préférence des groupes propyle ou butyle.
– les composés de formules (IV) et (V) dans lesquelles l'azote a été remplacé par un atome de phosphore.

Selon une caractéristique préférée de l'invention, les agents structurants sont les composés qui peuvent fournir des cations tétrapropylammonium ou tripropylammonium.

Avantageusement, l'agent structurant est introduit dans le mélange réactionnel sous forme de sel d'ammonium quaternaire de formule (V) ou de l'amine de formule (IV).

Le mélange réactionnel a la composition suivante, exprimée en rapport molaire :

Mod / ($SiF_6^{2-}$ + $T'F_6^{2-}$) avec Mod = modificateur de pH compris entre 0,25 et 8,0, de préférence entre 1,0 et 4,0,

Str / ($SiF_6^{2-}$ + $T'F_6^{2-}$) avec Str = agent structurant compris entre 0,04 et 3,0, de préférence entre 0,08 et 1,5

$H_2O$ / ($SiF_6^{2-}$ + $T'F_6^{2-}$) compris entre 15 et 300, de préférence entre 25 et 200

Adj / ($SiF_6^{2-}$ + $T'F_6^{2-}$) avec Adj = adjuvant au modificateur de pH compris entre 0 et 8,0, de préférence, compris entre 0 et 6,0.

Selon une variante d'exécution du procédé de l'invention, il est possible de préparer de zéolithes à base de silice et d'oxydes d'éléments tétravalents. Dans ce cas, la quantité d'élément tétravalent T' (T' = Ti, Ge, Zr et/ou Sn) est telle que le rapport molaire $T'F_6^{2-}$ / ($SiF_6^{2-}$ + $T'F_6^{2-}$) soit compris entre 0,001 et 0,50, et, de préférence, entre 0,005 et 0,25,

Selon un mode de réalisation pratique de l'invention, les différents réactifs sont mélangés à température ambiante le plus souvent entre 15°C et 25°C.

Le pH de ce milieu réactionnel avant chauffage est avantageusement compris entre 0 et 6,5 et de préférence entre 2 et 5,5. Il peut être ajusté par l'addition d'un acide ou d'une base.

On utilise, de préférence, une solution aqueuse d'ammoniaque

Si la base utilisée est organique, elle aura des propriétés d'agent structurant faible pour ne pas concurrencer l'agent structurant ajouté.

Ainsi, les bases convenables pour l'invention sont à titre d'exemples, la méthylamine, la diméthylamine, la triméthylamine, l'éthylamine, la diéthylamine et la triéthylamine.

Pour permettre une cristallisation rapide sans formation intermédiaire de gel, on peut disperser dans le mélange réactionnel, des cristaux de zéolithe du type MFI dans une proportion pouvant aller jusqu'à 50 % du poids équivalent de silice $SiO_2$ contenu dans la source $M_{2/n}SiF_6$.

A titre de germes de cristallisation, on peut faire appel à toute zéolithe ayant la structure MFI, quelle que soit sa composition chimique. On utilise, de préférence, une zéosilite c'est-à-dire une zéolithe de structure MFI

ne contenant que du silicium dans sa charpente.

La cristallisation de la zéolithe est effectuée par chauffage du mélange réactionnel à une température entre 120 et 250°C et, de préférence, entre 140 et 200°C pendant le temps nécessaire à la cristallisation, selon un mode opératoire classique de synthèse de zéolithe et connu de l'homme de métier.

A titre indicatif, la durée de chauffage peut être comprise entre 2 heures et 200 heures.

Ce chauffage et cette cristallisation sont réalisés de préférence dans un récipient ou autoclave revêtu d'une couche telle que, par exemple, le polytétrafluoréthane.

Le mélange réactionnel peut être agité ou non

Après chauffage, le pH du milieu se situe avantageusement entre 6,5 et 12,0, et, de préférence, entre 7,0 et 10,0.

Le procédé de préparation de zéolithes selon l'invention, par cristallisation d'une zéolithe à partir d'un milieu homogène, peut être conduit dans des conditons de gravité terrestre ou bien en microgravité voire en état d'apesanteur.

L'influence favorable que l'on peut escompter de l'apesanteur est la suivante :

– pas de sédimentation des cristaux en cours de formation ce qui laisse supposer une croissance régulière des cristaux car celle-ci est pertubée par la sédimentation,

– pas de courants de convexion entraînant des heurts entre les cristaux avec formation de nouveaux germes par le phénomène de "breeding".

On définit l'état de l'apesanteur, un état dans lequel les effets de la pesanteur sont annihilés. Un corps est en état d'apesanteur lorsqu'il n'est plus soumis à l'attraction terrestre.

L'état d'apesanteur peut être obtenu lorsque la force d'attraction terrestre est compensée, par exemple, par la mise en orbite de l'objet, la force centrifuge compensant alors la force d'attraction terrestre (vol satellite).

Conformément au procédé de l'invention, l'étape de cristallisation peut être conduite dans les conditions usuelles de gravité terrestre c'est-à-dire que dans ce cas, l'intensité g de la pesanteur qui mesure également l'accélération du mouvement en chute libre d'un corps pesant, est de l'ordre de 9,808 $m/s^2$. Il est à noter que g varie selon la lattitude et l'altitude de l'objet. La valeur donnée, à titre illustratif, est définie au niveau de la mer et à la lattitude de la ville de Paris.

Selon l'invention, $g_i$ peut être inférieur à l'accélération due à l'attraction terrestre. La limite inférieure ne présente aucun caractère critique et peut autant que possible se rapprocher de 0. D'un point de vue de réalisation pratique, $g_i$ se situe dans un intervalle allant de $10^{-6}$.g à g et, de préférence, de $10^{-5}$.g à g. Cet intervalle est donné à titre indicatif, sans caractère limitatif.

Après l'étape de cristallisation au sol ou dans l'espace, les cristaux sont séparés, au sol, selon les techniques classiques de séparation solide / liquide, notamment, par filtration ou centrifugation.

Ledit précipité cristallin est avantageusement lavé pour éliminer les impuretés et notamment les cations ou anions non accrochés ou incorporés dans la structure.

Le précipité obtenu dénommé "précurseur de zéolithe" est un produit cristallin du type zéolithe à base de silice et, éventuellement, d'oxydes d'éléments tétravalents T′ répondant à la formule générale (VI) suivante :

$$(Si_{96-x}\,T_x)O_{192},\ 4 \pm 1\ (S^+F^-) \qquad (VI)$$

dans ladite formule (VI) :

– x est compris entre 0 et 12,0, de préférence compris entre 0 et 6,0,

– T symbolise $Si^{4+}$ et les éléments tétravalents T′ suivants : Ti, Ge, Zr et/ou Sn.

– $S^+$ symbolise le cation provenant de l'agent structurant.

Il représente plus particulièrement un cation résultant de l'amine de formule (IV), un cation de type ammonium quaternaire de formule (V), ou ces mêmes composés dans lesquels l'azote est remplacé par un atome de phosphore.

Dans le cas de la préparation d'une zéolithe comprenant essentiellement de la silice, ledit précurseur de zéolithe est un produit cristallin du type zéolithe à base de silice répondant à la formule générale (VIa) suivante :

$$Si_{96}\,O_{192},\ 4 \pm 1\ (S^+F^-) \qquad (VIa)$$

dans ladite formule (VIa) :

– $S^+$ symbolise le cation provenant de l'agent structurant.

Dans le cas de la préparation d'une zéolithe comprenant de la silice et des oxydes d'éléments tétravalents, ledit précurseur de zéolithe est un produit cristallin du type zéolithe à base de silice et d'oxydes d'éléments tétravalents T′ répondant à la formule générale (VIb) suivante

$$(Si_{96-x}\,T'_x)O_{192},\ 4 \pm 1\ (S^+F^-) \qquad (VIb)$$

dans ladite formule (VIb):

– x est inférieur à 12,0, de préférence compris entre 0,1 et 6,0,

– T′ symbolise les éléments tétravalents suivants : Ti, Ge, Zr et/ou Sn.

– $S^+$ symbolise le cation provenant de l'agent structurant.

Le précurseur de zéolithe répondant à la formule (VI) est aisément manipulable et est soumis à une opération de calcination conduisant ainsi à la production de zéolithe.

Il est également possible d'effectuer avant calcination un séchage, le plus souvent sous pression atmosphérique, à une température comprise entre 30°C et 100°C.

Puis intervient la calcination qui consiste à chauffer le précipité éventuellement séché à une température supérieure à 450°C, de préférence supérieure à 500°C afin de décomposer les espèces organiques contenues dans le précipité, telles que, par exemple, l'agent structurant.

On obtient une zéolithe de structure MFI à base de silice et éventuellement d'oxydes d'éléments tétravalents T′ qui répond à la formule (VII) suivante :

$$(Si_{96-x}\, T_x)\, O_{192} \qquad (VII)$$

dans ladite formule (VII):

– x est compris entre 0 et 12,0, de préférence compris entre 0 et 6,0,

– T symbolise $Si^{4+}$ et les éléments tétravalents T′ suivants : Ti, Ge, Zr et/ou Sn.

Conformément au procédé de l'invention, il est possible d'obtenir une zéolithe de structure MFI à base de silice répondant à la formule (VIIa ) suivante :

$$Si_{96}\, O_{192} \qquad (VIIa)$$

ou une zéolithe de structure MFI à base de silice et d'oxydes d'éléments tétravalents T′ qui répond à la formule (VIIb) suivante :

$$(Si_{96-x}\, T'_x)\, O_{192} \qquad (VIIb)$$

dans ladite formule (VIIb):

– x est inférieur à 12,0, de préférence compris entre 0,1 et 6,0,

– T′ symbolise les éléments tétravalents suivants : Ti, Ge, Zr et/ou Sn.

L'identification des zéolithes à structure MFI obtenues selon le procédé de l'invention peut être notamment réalisée par l'établissement du diagramme de diffraction du précurseur qui lui donne naissance.

Le précurseur de zéolithe de l'invention a un système cristallin orthorhombique et un diagramme de diffraction des rayons X défini dans le tableau I.

Dans ce tableau, les valeurs extrêmes des différentes équidistances réticulaires $d_{hkl}$ sont données et correspondent aux concentrations limites de l'élément T′ incorporé dans la charpente de la zéolithe avant calcination ou plus précisément au rapport T′/(Si + T′) : avec T′ = $Ti^{4+}$, $Ge^{4+}$, $Zr^{4+}$ et/ou $Sn^{4+}$.

Ce diagramme de diffraction peut être obtenu à l'aide d'un diffractomètre en utilisant la méthode classique des poudres avec le rayonnement $K\alpha$ du cuivre. A partir de la position des pics de diffraction représentée par l'angle $2\theta$ on calcule, par la relation de Bragg, les équidistances réticulaires $d_{hkl}$ caractéristiques de l'échantillon. L'estimation de l'erreur de mesure $\Delta(d_{hkl})$ sur $d_{hkl}$ se calcule, en fonction de l'erreur absolue $\Delta(2\theta)$ affectée à la mesure de $2\theta$, par la relation de Bragg. Une erreur absolue $\Delta(2\theta)$ égale à $\pm$ 0,2° est couramment admise. L'intensité relative I/Io affectée à chaque valeur de $d_{hkl}$ est estimée à partir de la hauteur du pic de diffraction correspondant. On utilise souvent une échelle de symboles pour caractériser cette intensité : FF = très fort, F = fort, mF = moyen à fort, m = moyen, mf = moyen à faible, f = faible.

La valeur du volume $V_o$ de la maille cristallographique de la zéolithe avant calcination, est fonction de la substitution du silicium par l'élément T′.

Dans le tableau I donné ci-après, on a reporté les raies principales obtenues.

TABLEAU I

Diagramme de diffraction des rayons X

| Valeurs extrêmes des $d_{hkl}$ (nm) | $I/I_o$ | Valeurs extrêmes des $d_{hkl}$ (nm) | $I/I_o$ |
|---|---|---|---|
| 1,112-1,132 | F | 0,372-0,379 | mF |
| 0,994-1,014 | F | 0,369-0,375 | mF |
| 0,969-0,983 | mF | 0,362-0,368 | mF |
| 0,894-0,908 | mf | 0,356-0,362 | f |
| 0,740-0,752 | m | 0,343-0,349 | f |
| 0,701-0,713 | f | 0,340-0,346 | m |
| 0,666-0,677 | f | 0,330-0,336 | mf |
| 0,629-0,639 | m | 0,328-0,334 | mf |
| 0,601-0,611 | mf | 0,322-0,327 | f |
| 0,592-0,603 | m | 0,301-0,306 | m |
| 0,566-0,576 | m | 0,294-0,299 | m |
| 0,552-0,562 | m | 0,291-0,296 | mf |
| 0,494-0,503 | mf | 0,271-0,275 | f |
| 0,455-0,464 | mf | 0,258-0,262 | f |
| 0,439-0,448 | f | 0,254-0,258 | f |
| 0,432-0,440 | mf | 0,248-0,252 | f |
| 0,421-0,429 | m | 0,246-0,250 | f |
| 0,397-0,404 | mf | 0,238-0,241 | f |
| 0,390-0,397 | f | 0,237-0,240 | f |
| 0,380-0,387 | FF | 0,199-0,201 | mf |
| | | 0,198-0,200 | m |

Les zéolithes obtenues selon le procédé de l'invention peuvent être utilisées dans la catalyse de nombreuses réactions telles que, par exemple, les réactions de dismutation ou d'alkylation, l'hydrogénolyse et l'hydrogénation de coupes pétrolières ou dans les procédé de reformage.

Les zéolites obtenues selon le procédé de l'invention conviennent tout à fait bien comme catalyseurs des réactions d'hydroxylation des phénols et des éthers de phénols. Pour les conditions de mise en oeuvre, on peut se reporter à la demande de brevet française n° 87 15247 dont le contenu est incorporé par référence.

D'autres buts, caractéristiques et détails de l'invention apparaîtront plus clairement au vu des exemples suivants donnés uniquement à titre indicatif et illustratif.

Exemple 1

On réalise une série d'essais (1a à 1e) de préparation de zéolithes à base de silice selon un procédé mettant en oeuvre un modificateur de pH (urée ou cyanamide) mais sans ajout d'adjuvant.

Les mélanges réactionnels réalisés correspondent aux compositions molaires données dans le tableau II. Les quantités engagées dans chaque essai, représentent 1/15ème de la composition indiquée en moles.

Les solutions des mélanges réactionnels sont obtenues par dissolution dans l'eau :

– de la source de silicium : $(NH_4)_2$ $SiF_6$ > 98 % en poids commercialisé par la société PROLABO,

– de l'agent structurant : bromure de tétrapropylammonium $Pr_4$ N Br > 98 % commercialisé par la société FLUKA,

– du modificateur de pH qui est l'urée (> 99,5 % de MERCK) dans les essais 1a à 1d et le cyanamide (> 98 % de MERCK) dans l'essai 1e.

Le pH initial des solutions est ajusté à la valeur donnée dans le tableau II par ajout de quelques gouttes d'ammoniaque à 28 %.

Les germes si utilisés dans certains essais sont des cristaux de zéolithes de type MFI (à savoir une zéosilite), finement broyés et les quantités indiquées dans le tableau II en % sont relatives à la masse de silice $SiO_2$ contenu dans $(NH_4)_2$ $SiF_6$ engagé.

Les mélanges réactionnels sont chauffés dans des autoclaves revêtus par du polytétrafluoroéthane aux températures et pendant la durée (en jours) indiquées dans le tableau II.

Les résultats obtenus sont donnés dans le tableau II : le rendement ρ en solide recueilli est calculé par rapport à $SiO_2$ engagé et le taux de cristallisation de la zéolithe est exprimée en % pondéral.

**TABLEAU II**

| REF. | MODIFICATEUR DE pH | COMPOSITION MOLAIRE | | | | CONDITIONS OPERATOIRES | | | | | | RESULTATS | |
|---|---|---|---|---|---|---|---|---|---|---|---|---|---|
| | | $(NH_4)_2SiF_6$ | $Pr_4$ N Br | Modificateur | $H_2O$ | germes | pHi | agit | t°C | durée | pHf | rendement ρ | MFI |
| 1a | urée | 1 | 0,125 | 1 | 50 | - | 5 | oui | 170 | 1 j | 8 | 20 % | 90 % |
| 1b | urée | 1 | 0,125 | 2 | 50 | 2 % | 3 | non | 170 | 1 j | 9 | 50 % | 90 % |
| 1c | urée | 1 | 0,125 | 2 | 50 | 10 % | 3 | oui | 200 | 1 j | 9 | 60 % | >95 % |
| 1d | urée | 1 | 0,195 | 3 | 200 | 2 % | 3 | oui | 200 | 1 j | 8 | 70 % | 85 % |
| 1e | cyanamide | 1 | 0,125 | 2 | 100 | 1 % | 4,5 | non | 170 | 3 j | 8,5 | 55 % | 85 % |

Dans le tableau II, les abréviations suivantes signifient :

– Mod : modificateur de pH
– pHi : pH initial
– pHf : pH final
– agit : agitation
– t°C : température en °C

Les analyses chimiques effectuées sur les échantillons, après séparation des impuretés par dissolution dans l'eau à l'ébullition de l'échantillon, correspondent à la formule (VI) et le spectre de diffraction RX est conforme au tableau I.

Exemple 2

On conduit une série de 5 essais qui montrent qu'il est possible d'ajouter des adjuvants (Adj) dans le but de modifier la vitesse d'accroissement du pH afin d'obtenir des cristaux plus purs.

Les essais sont réalisés selon le mode opératoire de l'exemple 1, avec 2 % de germes.

Le tableau III donne le nombre de moles de modificateur de pH ou d'adjuvant ajouté à un mélange réactionnel contenant $1(NH_4)_2\ SiF_6$, $0{,}1Pr_4\ NBr$ et 100 $H_2O$.

Les quantités engagées par essai correspondant à 1/15ème de la composition exprimée en moles ci-dessous.

Les mélanges réactionnels sont chauffés, sans agitation en autoclave à 170°C pendant 2 jours.

Les résultats obtenus sont consignés dans le tableau III.

**TABLEAU III**

| Réf. | MODIFICATEUR DE PH | ADJUVANT | COMPOSITION MOLAIRE | | CONDITIONS OPERATOIRES | | RESULTATS | |
|---|---|---|---|---|---|---|---|---|
| | | | MOD | ADJ | pHi | pHf | Rendement ρ | % MFI |
| 2 a | UREE | - | 1,3 | - | 3,5 | 8,0 | 35 | 85 % |
| 2 b | UREE | FORMOL | 1,3 | 1,0 | 3,0 | 8,0 | 40 | > 95 % |
| 2 c | CYANAMIDE | - | 1,0 | - | 3,5 | 8,5 | 35 | 85 % |
| 2 d | CYANAMIDE | FORMOL | 1,0 | 1,0 | 3,0 | 8,0 | 35 | > 95 % |
| 2 e | MELAMINE | FORMOL | 1,0 | 1,0 | 3,0 | 7,5 | 50 | > 95 % |

Il ressort de l'examen du tableau III que la présence de l'adjuvant permet un accroissement du taux de cristallisation de la zéolithe.

Exemple 3

Dans cet exemple, on réalise la préparation en milieu homogène d'une zéolithe de structure type MFI, à base d'oxyde de silicium, selon deux modes de réalisation : l'un consiste à conduire le procédé en apesanteur (3a) et l'autre au sol (3b).

On prépare deux mélanges réactionnels identiques 3a et 3b selon le mode opératoire décrit ci-après.

On dissout successivement dans 7,2 g d'eau distillé :

- 0,712 g de $(NH_4)_2SiF_6$ à 99,99 % en poids commercialisé par la société Aldrich,
- 0,532 g de bromure de tétrapropylammonium, $Pr_4NBr$ commercialisé par la société Fluka,
- 0,504 g de cyanamide, N≡C-$NH_2$ commercialisé par la socité Fluka.

La composition en moles du milieu réactionnel est la suivante :

$$1(NH_4)SiF_6 ; 0,5\ Pr_4NBr ; 3\ N{\equiv}C\text{-}NH_2 \text{ et } 100\ H_2O.$$

Les deux solutions 3a et 3b obtenues sont transférées quantitativement dans deux autoclaves chemisés par du polytétrafluoroéthane et dont la contenance nominale est de 18 ml. Le taux de remplissage est donc de 45 % environ.

Les deux autoclaves sont laissés à la température ambiante pendant 10 jours. L'autoclave contenant la solution 3a est ensuite mis en apesanteur à 23 ± 5°C sur un satellite (microgravité = $10^{-5}$.g), puis chauffé, au bout de 1 jour, à 170°C (durée de montée en température de 2 heures 40 minutes) pendant 68 heures et ensuite refroidi à la température de 23 ± 5°C, en l'espace de 28 heures. Il reste encore en apesanteur 9 jours à la température précédente avant d'être récupéré au sol et ouvert 2 jours après la récupération.

L'autoclave contenant la solution 3b subit les mêmes opérations et avec la même chronologie que l'autoclave précédant sauf que tout se déroule au sol.

Après ouverture, le contenu des deux autoclaves est filtré et les solides récupérés sont analysés par différentes techniques (microscopie, rayons X, analyse chimique) et les résultats figurent dans le tableau IV ci-dessous.

Le pH des solutions est passé de 4 à 9 au cours de la synthèse.

TABLEAU IV

| | 3a | 3b |
|---|---|---|
| Quantité de solide recueillie | 0,149 g | 0,166 g |
| Morphologie et nature des phases | - Prismes L = 400-500µ )<br>l = e = 150-200µ )<br>- Prismes L = 100-200µ ) structure<br>l = e = 50-150µ ) MFI<br>- Prismes L = 10- 80µ )<br>associés en )<br>plaques )<br><br>- Particules sphériques )<br>Ø 2-5µ en amas ) amorphes<br>(rares) )<br><br>- Plaquettes (rares) ) solubles<br>100x50µ ) | - Prismes L = 400-500µ)<br>l = e = 150-200µ) structure<br>- Prismes L = 100-200µ) MFI<br>l = e = 50-150µ)<br><br>- Particules sphériques )<br>Ø 2-5µ en amas ) amorphes<br>(fréquentes) )<br><br>- Plaquettes (fréquentes)) solubles<br>100x60µ ) |
| Composition chimique des prismes | $(SiO_2)_{96}$ . $4Pr_4NF$ | $(SiO_2)_{96}$ . $4Pr_4NF$ |

(L = longueur, l = largeur, e = épaisseur des prismes, Ø = diamètre)

Exemple 4

On réalise une série d'essais (4a à 4j) de préparation de zéolithes à base de silice et d'oxyde de titane selon un procédé mettant en oeuvre un modificateur de pH (urée ou cyanamide) mais sans ajout d'adjuvant.

Les mélanges réactionnels réalisés correspondent aux compositions molaires données dans le tableau V. Les quantités engagées dans chaque essai, représentent 1/15ème de la composition indiquée en moles.

Les solutions des mélanges réactionnels sont obtenues par dissolution dans l'eau :

– de la source de silicium : $(NH_4)_2$ $SiF_6$ > 98 % en poids commercialisé par la société PROLABO,
– de la source de titane : $H_2$ Ti $F_6$ en solution aqueuse à 60 % vendu par ALFA,
– de l'agent structurant : bromure de tétrapropylammonium $Pr_4$ N Br > 98 % commercialisé par la société FLUKA,
– du modificateur de pH qui est l'urée (> 99,5 % de MERCK) dans les essais 4a à 4i et le cyanamide (> 98 % de MERCK) dans l'essai 4j.

Le pH initial des solutions est ajusté à la valeur donnée dans le tableau V par ajout de quelques gouttes d'ammoniaque à 28 %.

Les germes si utilisés dans certains essais sont des cristaux de zéolithes de type MFI, finement broyés et les quantités indiquées dans le tableau V en % sont relatives à la masse de silice $SiO_2$ contenu dans $(NH_4)_2$ $SiF_6$ engagé.

Les mélanges réactionnels sont chauffés dans des autoclaves revêtus par du polytétrafluoroéthane aux températures et pendant la durée (en jours) indiquées dans le tableau V.

Les résultats obtenus sont donnés dans le tableau V : le rendement ρ en solide recueilli est calculé par rapport à la somme $SiO_2$ + $TiO_2$ engagée et le taux de cristallisation de la zéolithe est exprimée en % pondéral.

TABLEAU V

| REF. | MODIFICATEUR DE pH | COMPOSITION MOLAIRE | | | | | CONDITIONS OPERATOIRES | | | | | | RESULTATS | |
|---|---|---|---|---|---|---|---|---|---|---|---|---|---|---|
| | | $(NH_4)_2SiF_6$ | $H_2TiF_6$ | $Pr_4N$ Br | Mod | $H_2O$ | germes | pHi | agit | t°C | durée | pHf | rendement $\rho$ | M I |
| 4a | urée | 1 | 0,15 | 0,125 | 1 | 50 | 1 % | 5 | non | 170 | 1 j | 8 | 20 % | 85 % |
| 4b | urée | 1 | 0,15 | 0,125 | 2 | 50 | - | 3 | non | 170 | 1 j | 9 | 50 % | 35 % |
| 4c | urée | 1 | 0,15 | 0,125 | 2 | 50 | 2 % | 3 | non | 170 | 1 j | 9 | 55 % | 80 % |
| 4d | urée | 1 | 0,15 | 0,125 | 2 | 50 | 10 % | 3 | non | 170 | 1 j | 9 | 55 % | >95 % |
| 4e | urée | 1 | 0,1 | 0,125 | 2 | 50 | - | 3 | oui | 200 | 1 j | 9 | 50 % | 50 % |
| 4f | urée | 1 | 0,1 | 0,125 | 2 | 50 | 2 % | 3 | oui | 200 | 1 j | 9 | 50 % | >95 % |
| 4g | urée | 1 | 0,1 | 0,125 | 2 | 200 | 2 % | 3 | oui | 200 | 1 j | 7,5 | 50 % | 90 % |
| 4h | urée | 1 | 0,05 | 0,195 | 3 | 200 | 2 % | 3 | oui | 200 | 1 j | 8 | 65 % | 85 % |
| 4i | urée | 1 | 0,25 | 0,5 | 2 | 100 | 1 % | 3 | non | 170 | 3 j | 8,5 | 60 % | 75 % |
| 4j | cyanamide | 1 | 0,25 | 0,125 | 2 | 100 | 1 % | 4,5 | non | 170 | 3 j | 8,5 | 50 % | 80 % |

Dans le tableau V, les abréviations suivantes signifient :

– Mod : modificateur de pH
– pHi : pH initial
– pHf : pH final
– agit : agitation
– t°C : température en °C

Les analyses chimiques effectuées sur les échantillons 4c, 4g et 4i, après séparation des impuretés par dissolution dans l'eau à l'ébullition de l'échantillon, montrent la présence de respectivement 0,9 %, 0,4 et 17 % en poids de titane.

Exemple 5 :

On conduit une série de 7 esais qui montrent qu'il est possible d'utiliser des mélanges de modificateurs de pH ou d'ajouter des adjuvants (Adj) dans le but de modifier la vitesse d'accroissement du pH afin d'obtenir des cristaux plus purs.

Les essais sont réalisés selon le mode opératoire de l'exemple 4, avec 2 % de germes.

Le tableau VI donne le nombre de moles de modificateur de pH ou d'adjuvant ajouté à un mélange réactionnel contenant 1$(NH_4)_2$ $SiF_6$, 0,25 $H_2TiF_6$, 0,1 $Pr_4$ NBr et 100 $H_2O$.

Les quantités engagées par essai correspondant à 1/15ème de la composition exprimée en moles ci-dessous.

Les mélanges réactionnels sont chauffés, sans agitation en autoclave à 170°C pendant 2 jours.

Les résultats obtenus sont consignés dans le tableau VI.

**TABLEAU VI**

| Réf. | MODIFICATEUR DE PH | ADJUVANT | COMPOSITION MOLAIRE | | CONDITIONS OPERATOIRES | | RESULTATS | |
|---|---|---|---|---|---|---|---|---|
| | | | MOD | ADJ | pHi | pHf | Rendement ρ | % MFI |
| 5 a | UREE | - | 1,3 | - | 3,5 | 8,0 | 40 | 85 % |
| 5 b | UREE | FORMOL | 1,3 | 1,0 | 3,0 | 8,0 | 40 | > 95 % |
| 5 c | CYANAMIDE | - | 1,0 | - | 3,5 | 8,5 | 30 | 85 % |
| 5 d | CYANAMIDE | FORMOL | 1,0 | 1,0 | 3,0 | 8,0 | 30 | > 95 % |
| 5 e | CYANAMIDE<br>HEXAMETHYLENETETRAMINE | - | 3,0<br>1,0 | - | 3,5 | 9,0 | 50 | > 95 % |
| 5 f | UREE<br>HEXAMETHYLENETETRAMINE | - | 1,0<br>1,0 | - | 3,5 | 8,5 | 45 | > 95 % |
| 5 g | MELAMINE | FORMOL | 1,0 | 1,0 | 3,0 | 7,5 | 40 | > 95 % |

Il ressort de l'examen du tableau VI que la présence de l'adjuvant permet un accroissement du taux de cristallisation de la zéolithe.

Exemple 6

Les deux essais de l'exemple 6 correspondent à la préparation de zéolithes du type MFI selon le procédé de l'invention et contenant l'élément germanium à côté de l'élément silicium. Dans ce cas, il est préférable de partir de réactifs ne contenant pas de cations alcalins ou alcalino-terreux pour minimiser la formation des germanates correspondants, peu solubles.

La composition molaire du mélange réactionnel est donnée dans le tableau VII. Les quantités engagées dans chaque essai, représentent 1/15ème de la composition indiquée en moles.

On prépare une solution de $H_2GeF_6$ par dissolution de $GeO_2$ dans un léger excès de solution aqueuse à 40 % de HF. Cette solution contient environ 10 moles d'eau pour 1 mole de $H_2GeF_6$.

On l'ajoute à une solution aqueuse à 31 % de $H_2SiF_6$ (Prolabo, contenant environ 18,5 moles d'eau pour 1 mole de $H_2SiF_6$) dans les proportions indiquées dans le tableau VII.

On dissout dans ce mélange 0,25 mole de bromure de tétrapropylammonium et 1,5 moles d'urée par mole de $H_2SiF_6$ introduit.

On amène ensuite le pH du mélange entre 4 et 5 par addition d'une solution aqueuse à 40 % de méthylamine. Cette dernière solution contient environ 2,5 moles d'eau pour une mole de méthylamine.

Enfin, on complète le mélange réactionnel par addition d'eau pour obtenir un rapport molaire $H_2O/(Si+Ge)$ égal à 50 et on ajoute 1 % de germes comme dans l'exemple 4.

Le mélange réactionnel est chauffé à 170° C, pendant 1 jour.

Les résultats obtenus sont consignés dans le tableau VII : le rendement $\rho$ en solide recueilli est calculé par rapport à la somme $SiO_2$ + $GeO_2$ engagée et le taux de cristallisation de la zéolithe est exprimée en % poids pondéral.

Après lavage à l'eau chaude pour éliminer les impuretés du type germanates d'ammonium, on dose la teneur en germanium des cristaux et on trouve respectivement 2,5 % et 10 % dans les échantillons 6a et 6b.

TABLEAU VII

| Réf. | MODIFICATEUR DE pH | ADJUVANT | COMPOSITION MOLAIRE | | RESULTATS | |
|---|---|---|---|---|---|---|
| | | | $H_2SiF_6$ | $H_2GeF_6$ | Rendement $\rho$ | % MFI |
| 6 a | UREE | - | 1 | 0,05 | 40 % | > 95 % |
| 6 b | UREE | - | 1 | 0,20 | 40 % | 90 % |

Exemple 7

Les deux essais de l'exemple 7 correspondent à la préparation de zéolithes de type MFI selon le procédé de l'invention et contenant les éléments étain ou zirconium, à côté de l'élément silicium.

En utilisant le mode opératoire décrit dans l'exemple 4 et en remplaçant $H_2TiF_6$ respectivement par $Na_2SnF_6$ et $Na_2ZrF_6$ (STREM), on prépare deux mélanges réactionnels, référencés respectivement 7a et 7b, correspondant à la composition molaire de l'essai 4 g.

Les mélanges réactionnels sont chauffés à 170° C pendant 1 jour.

Après cristallisation dans les conditions de l'essai 4, on recueille par filtration deux solides qui sont lavés à l'eau chaude.

L'analyse radiocristallographique montre qu'il s'agit de deux zéolithes du type MFI contenant 3,1 % d'étain (échantillon 7a) et 1,3 % de zirconium (échantillon 7b).

Exemple 8

Dans cet exemple, on réalise la préparation en milieu homogène, d'une zéolithe à base d'oxyde de silicium et de titane de structure type MFI, selon deux modes de réalisation : l'un consiste à conduire le procédé en apesanteur (8a) et l'autre est conduit à titre comparatif au sol (8b).

On prépare deux mélanges réactionnels identiques 8a et 8b selon le mode opératoire décrit ci-après.

On dissout successivement dans 7,2 g d'eau distillée :

– 0,712 g de $(NH_4)_2SiF_6$ à 99,99 % en poids commercialisé par la Société Aldrich,
– 0,532 g de bromure de tétrapropylammonium, $Pr_4NBR$ commercialisé par la Société Fluka,
– et 0,48 g d'urée $O = C(NH_2)_2$ (> 99,5 %) commercialisé par la Société MERCK.

On ajoute à cette solution 0,309 g de solution aqueuse à 53 % de $H_2TiF_6$ (vendu par la Société Alpha).

On ajuste le pH à 4 en ajoutant sous agitation 0,04 g d'une solution aqueuse d'ammoniaque à 28 %. On introduit enfin dans le mélange, 0,0024 g de cristaux de structure MFI servant de germes (zéosilite).

La composition en moles du milieu réactionnel est la suivante :

$$1(NH_4)_2SiF_6 \text{ ; } 0,25\ H_2TiF_6 \text{ ; } 0,5\ Pr_4NBr \text{ ; } 2\ O = C(NH_2)_2 \text{ ; } 100\ H_2O.$$

Les deux solutions 8a et 8b obtenues sont transférées quantitativement dans deux autoclaves chemisés par du polytétrafluoroéthane et dont la contenance nominale est de 18 ml. Le taux de remplissage est donc de 45 % environ.

Les deux autoclaves sont laissés à la température ambiante pendant 10 jours. L'autoclave contenant la solution 8a est ensuite mis en apesanteur à 23 ± 5°C sur un satellite (microgravité = $10^{-5}$.g) puis chauffé, au bout de 1 jour, à 170°C (la durée de montée en température est de 2 heures 40 minutes) pendant 68 heures et enfin refroidi à la température de 23 ± 5°C en l'espace de 28 heures . Il reste encore en apesanteur 9 jours à la température précédente avant d'être récupéré au sol et ouvert 2 jours après la récupération.

L'autoclave contenant la solution 8b subit les mêmes opérations et avec la même chronologie que l'autoclave précédant sauf que tout se déroule au sol.

Après ouverture, le contenu des deux autoclaves est filtré et les solides récupérés sont analysés par différentes techniques (microscopie, rayons X, analyse chimique) et les résultats figurent dans le tableau VIII ci-dessous.

Le pH des solutions est passé de 4 à 8,5 au cours de la synthèse.

TABLEAU VIII

| | 8a | 8b |
|---|---|---|
| Quantité de solide recueillie | 0,184 g | 0,242 g |
| Morphologie et nature des phases | -Prismes associés en plaques ) avec deux populations de taille) (L=100-150µ, l=e=50µ rares) )MFI (L=10-40µ, l=5-20µ) ) e=2-8µ, fréquents) )<br><br>-Aiguilles (nombreuses))phase (L=100-3000µ) )microporeuse )(Ti,Si,F) | -Prismes associés en plaques ) avec deux populations de taille) (L=80µ, l=e=20-30µ, rares) )MFI (L=10-30µ, l=5-15µ ) e=1-10µ, fréquents) )<br><br>-aiguilles (peu nombreuses) Phase (L=100-300µ) )inconnue )(Ti,Si,F) |
| Composition chimique des prismes | $(Si_{96-x}Ti_xO_{192})\cdot 4Pr_4NF$ x=0,2-0,5 | $(Si_{96-x}TiO_{192})\cdot 4Pr_4NF$ x=0,2-0,5 |

(L = longueur, l = largeur, e = épaisseur des prismes)

## Revendications

**1 -** Procédé de préparation de zéolithes de structure MFI à base de silice caractérisé par le fait qu'il comprend les étapes suivantes :

(i) - la préparation d'un mélange réactionnel aqueux homogène contenant :

. une source de silicium sous forme de complexe $M_{2/n}$ $SiF_6$ (I) où M est un cation de valence n tel qu'un proton un ion alcalin un ion alcalino-terreux un métal de transition un ion ammonium ou ammonium quaternaire

. un agent chimique (Mod) qui fournit des ions $OH^-$ par décomposition hydrothermique dans les conditions réactionnelles,

. un agent structurant (Str) qui oriente et stabilise la formation de la zéolithe,

(i,i) - le chauffage de ce mélange réactionnel à une température d'au moins 120°C conduisant à la formation d'un précipité qui est ensuite séparé ;

(i,i,i) - la calcination dudit précipité à une température supérieure à 450°C pour l'élimination de l'agent structurant occlus dans les canaux.

**2 -** Procédé selon la revendication 1 caractérisé par le fait que l'on ajoute dans le mélange réactionnel une ou plusieurs sources d'éléments tétravalents T' sous forme de complexes $M_{2/n}$ T' $F_6$ (II), M ayant la signification donnée précédemment et T' représente le titane le germanium, le zirconium et/ou l'étain.

**3 -** Procédé selon la revendication 2 caractérisé par le fait que le rapport molaire $T'F_6^{2-}$ / ($SiF_6^{2-}$ + T' $F_6^{2-}$) soit compris entre 0,001 et 0,50, et, de préférence, entre 0,005 et 0,25.

**4 -** Procédé selon la revendication 1 caractérisé par le fait que l'on ajoute dans le mélange réactionnel un adjuvant au modificateur de pH.

**5 -** Procédé selon la revendication 4 caractérisé par le fait que le rapport molaire Adj/($SiF_6^{2-}$+ T' $F_6^{2-}$) est compris entre 0 et 8,0, de préférence entre 0 et 6,0.

**6 -** Procédé selon l'une des revendications 1 à 5 caractérisé par le fait que le rapport molaire Mod/($SiF_6^{2-}$+ T' $F_6^{2-}$) est compris entre 0,25 et 8,0, de préférence entre 1,0 et 4,0.

**7** - Procédé selon l'une des revendications 1 à 6 caractérisé par le fait que le rapport molaire Str/($SiF_6^{2-}$+ $T'F_6^{2-}$) est compris entre 0,04 et 3,0 de préférence entre 0,08 et 1,5.

**8** - Procédé selon l'une des revendications 1 à 7 caractérisé par le fait que le rapport molaire $H_2O$/($SiF_6^{2-}$+ $T'F_6^{2-}$) dans le milieu réactionnel est compris entre 15 et 300 de préférence entre 25 et 200.

**9** - Procédé selon l'une des revendications 1 à 8 caractérisé par le fait que le pH du milieu réactionnel est compris entre 0 et 6,5, de préférence entre 2,0 et 5,5.

**10** - Procédé selon la revendication 9 caractérisé par le fait que le pH est ajusté par addition d'une base choisie dans le groupe comprenant l'ammoniaque la méthylamine la diméthylamine la triméthylamine, l'éthylamine, la diéthylamine et la triéthylamine.

**11** - Procédé selon l'une des revendications 1 à 10 caractérisé par le fait que la source de silicium est l'acide fluorosilicique un fluorosilicate de métal alcalin, alcalino-terreux ou d'ammonium.

**12** - Procédé selon l'une des revendications 1 à 11 caractérisé par le fait que la source de l'élément tétravalent est un fluorotitanate, un fluorogermanate, un fluorozirconate et/ou un fluorostannate de métal alcalin, alcalino-terreux ou d'ammonium.

**13** - Procédé selon l'une des revendications 11 et 12 caractérisé par le fait que les complexes de formule (I) et (II) sont obtenus par dissolution des oxydes ou hydroxydes des éléments Si et T' dans l'acide fluorhydrique.

**14** - Procédé selon l'une des revendications 1 à 13 caractérisé par le fait que le modificateur de pH est l'urée les urées substituées, la thiourée, les thiourées substituées, le cyanamide, les cyanamides substitués l'hexaméthylènédiamine, la mélamine.

**15** - Procédé selon la revendication 14 caractérisé par le fait que le modificateur de pH est l'urée.

**16** - Procédé selon l'une des revendications 1 à 15 caractérisé par le fait que l'adjuvant au modificateur de pH est le formaldéhyde ou des sels.

**17** - Procédé selon l'une des revendications 1 à 16 caractérisé par le fait que l'agent structurant est choisi dans le groupe formé par :

- les amines tertiaires de formule (IV) :

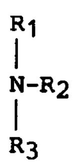

(IV)

dans laquelle :
$R_1$, $R_2$, $R_3$ identiques ou différents représentent un groupe alkyle, linéaire ou ramifié ayant de 1 à 6 atomes de carbone, de préférence un groupe propyle ou butyle.

- les sels d'ammonium quaternaire de formule (V) :

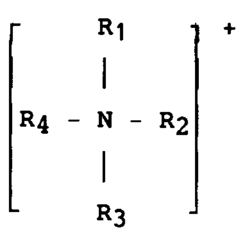

(V)

dans laquelle :
$R_1$, $R_2$, $R_3$, $R_4$ identiques ou différents représentent un groupe alkyle, linéaire ou ramifié ayant de 1 à 6 atomes de carbone, de préférence des groupes propyle ou butyle.

- les composés de formules (IV) et (V) dans lesquelles l'azote a été remplacé par un atome de phosphore.

**18** - Procédé selon l'une des revendications 1 à 17 caractérisé par le fait que l'on ajoute des cristaux de zéolithe du type MFI comme germes de cristallisation.

**19** - Procédé selon l'une des revendications 1 à 18 caractérisé par le fait que la cristallisation de la zéolithe est effectuée par chauffage du mélange réactionnel à une température de 120 à 250°C, de préférence de 140 à 200°C.

**20** - Procédé selon l'une des revendications 1 à 19 caractérisé par le fait que la cristallisation de la zéolithe

est effectuée dans des conditions de gravité terrestre ou de microgravité voire en état d'apesanteur.

**21** - Procédé selon la revendication 20 caractérisé par le fait que la cristallisation de la zéolithe est effectuée dans des conditions telles que l'intensité de la pesanteur varie entre $10^{-6}$.g et g de préférence entre $10^{-5}$.g et g.

**22** - Procédé selon l'une des revendications 1 à 21 caractérisé par le fait que le pH final du milieu réactionnel se situe entre 6,5 et 12,0, de préférence entre 7,0 et 10,0.